# EUROPÄISCHE PATENTSCHRIFT

(11) **EP 1 088 312 B1**
(45) Veröffentlichungstag und Bekanntmachung des Hinweises auf die Patenterteilung: **03.03.2004**
(21) Anmeldenummer: 99964475.0
(22) Anmeldetag: 14.06.1999
(51) Int. Cl.: G21C 7/08

(54) **VERFAHREN ZUM ANFAHREN UND ZUR ÜBERWACHUNG SOWIE EINRICHTUNG ZUR STEUERUNG EINES SIEDEWASSER-KERNREAKTORS**
STARTING AND MONITORING METHOD AND A DEVICE FOR CONTROLLING A BOILING WATER REACTOR
PROCEDE DE MISE EN MARCHE ET DE SURVEILLANCE ET DISPOSITIF DE COMMANDE D'UN REACTEUR NUCLEAIRE A EAU BOUILLANTE

(30) Priorität: 19.06.1998 DE 19827443
(43) Veröffentlichungstag der Anmeldung: 04.04.2001
(73) Patentinhaber: Framatome ANP GmbH, 91058 Erlangen (DE)
(72) Erfinder: SCHULZE, Joachim, D-60598 Frankfurt am Main (DE)
(74) Vertreter: Mörtel & Höfner
(86) Internationale Anmeldenummer: PCT/EP1999/004082
(87) Internationale Veröffentlichungsnummer: WO 2000/014749

(56) Entgegenhaltungen:
- US-A- 3 385 758
- US-A- 4 285 769
- PATENT ABSTRACTS OF JAPAN vol. 003, no. 151 (M-084), 12. Dezember 1979 (1979-12-12) & JP 54 129290 A (HITACHI LTD), 6. Oktober 1979 (1979-10-06)

## Beschreibung

Die Erfindung betrifft ein Verfahren zum Anfahren und zur Überwachung sowie eine Einrichtung zur Steuerung eines Siedewasser-Kernreaktors.

Beim Anfahren eines Kernreaktors wird der Neutronenflußpegel, welcher proportional zu der durch Kernspaltungen erzeugten Leistung des Reaktors ist, vom Neutronenfluß-Quellpegel bei etwa 10⁻⁹ der Nennleistung zunächst bis zum Erreichen einer Aufheizleistung gesteigert, die z.B. etwa 10⁻³ der Nennleistung beträgt. In diesem Zwischenbereich der Reaktorleistung verändert das Ansteigen der Neutronenflußdichte die thermischen Verhältnisse im Reaktorkern, d.h. insbesondere die Temperaturen des Kernbrennstoffs, praktisch nicht, so daß sich so gut wie keine Reaktivitäts-Rückkopplungseffekte ergeben, welche die Anstiegsrate der Neutronenflußdichte beeinflussen könnten. Erst oberhalb dieses Zwischenbereichs - also im Prozentbereich der Reaktorleistung (unterster Leistungsbereich) - setzt aufgrund der dann fühlbaren Erwärmung des Kernbrennstoffs und dem daraus resultierenden (um die Brennstoff-Zeitkonstante verzögerten) Energieeintrag in das Kühlmittel eine den Reaktivitäts-Koeffizienten des Reaktorkerns entsprechende Reaktivitäts-Rückkopplung ein, welche in der Regel eine ständige Verlangsamung des Leistungsanstiegs bewirkt, bis er vollständig zum Erliegen gekommen ist.

Das Ansteigen der Neutronenflußdichte durch die vielew Dekaden des Zwischenbereichs wird durch.Einstellen eines leicht überkritischen Kernzustands bewirkt. Der effektive Multiplikationsfaktor der Kernanordnung k_{eff} wird also geringfügig über 1 angehoben. Hierzu dienen Steuerstäbe, deren Absorptionswirkung für Neutronen durch dosiertes Herausfahren aus dem Kern gezielt vermindert wird. Die Neutronenflußdichte steigt nach Erreichen eines überkritischen Kernzustands gemäß einer Exponentialfunktion an. Die Anstiegsrate kann durch Angabe der sogenannten Reaktorperiode gekennzeichnet werden. Die Reaktorperiode ist diejenige Zeitspanne, in der sich die Neutronenflußdichte im Kern um den Faktor e = 2,718 .... verändert.

Die durch eine Kernspaltung frei werdenden Neutronen sind überwiegend "prompte" Neutronen, die vom gespalteten Kern sofort freigesetzt werden. Ein geringer Anteil sind "verzögerte Neutronen", die von instabilen Folgekernen stammen.

Bei einem normalen Anfahrvorgang wird die Überschußreaktivität des Kerns (also der den Wert 1 übersteigende Teil des effektiven Multiplikationsfaktors k_{eff}) so eingestellt, daß die verzögerten Neutronen den bestimmenden Einfluß auf die Anstiegsrate der Neutronenflußdichte behalten. Um eine gute steuerbarkeit zu gewährleisten, ist es üblich, das Anfahren so vorzunehmen, daß die Reaktorperiode mehr als 30 Sekunden beträgt. Die Steuerstäbe werden also entsprechend langsam herausgefahren, um den Multiplikationsfaktor stets nur geringfügig im überkritischen Bereich zu halten. Sonst könnte nämlich die Überschußreaktivität beim Anfahren des Kernreaktors so groß werden, daß die Anstiegsrate der Neutronenflußdichte ausschließlich von den prompten Neutronen mit ihrer sehr schnellen Generationenfolge bestimmt wird und die verzögerten Neutronen jeden Einfluß auf die Anstiegsrate verlieren. Dieser Reaktorzustand wird als "prompt kritisch" bezeichnet. Die zugehörige Reaktorperiode liegt weit unterhalb von 1 Sekunde. Der Anfahrvorgang geht dann in eine "Exkursion" über, bei der - je nach Überschußreaktivität - kurzzeitig der Nennwert der Reaktorleistung überschritten werden kann, ehe die Leistung durch inhärente Reaktivitäts-Gegenkopplung abgefangen wird. Anders als bei den unter-promptkritischen Anfahrvorgängen fängt sich der Leistungsanstieg bei Exkursionen also nicht bereits im untersten Leistungsbereich ab.

Daraus ergibt sich die allgemeine Aufgabe, das Herausfahren der Steuerstäbe beim Anfahren so zu steuern bzw. zu überwachen, daß der Neutronenfluß (und damit die Reaktorleistung) sich nur kontrolliert erhöht und z.B. die Wahrscheinlichkeit von Exkursionen verringert oder möglichst beseitigt wird.

Ob ein einzelner Steuerstab rasch, langsam oder gar nicht gezogen werden kann, ohne den effektiven Multiplikationsfaktor zu stark zu ändern, hängt von der aktuellen Konfiguration der Steuerstäbe und dem dadurch hervorgerufenen Neutronenfluß ab, dem er ausgesetzt ist. Ist der lokale Neutronenfluß am Ort dieses Steuerstabs gering, weil in seiner Nachbarschaft viele Steuerstäbe noch in der Anfangslage (vollkommen in den Kern eingefahren) sind und daher durch ihr eigenes Absorptionsvermögen den betreffenden Steuerstab abschirmen, so ist der Steuerstab nur wenig wirksam und kann herausgefahren werden, ohne die Reaktivitätsverhältnisse des Kerns stark zu verändern.

Sind dagegen alle Steuerstäbe in der Umgebung dieses Steuerstabs in der Endstellung (vollkommen aus dem Kern herausgefahren), so hat der Steuerstab seine höchste Wirksamkeit.

Die zur Erzeugung von Energie eingesetzten aktiven Brennelemente sind im Reaktorkern mit zueinander parallelen Längsachsen in einer senkrecht zu ihren Längsachsen stehenden Querschnittsebene des Reaktorkerns in einem eine regelmäßige Gitterstruktur mit rechteckigen, bzw. quadratischen Maschen bildenden Muster angeordnet. Sie stehen dabei derart in den Maschen des gitterförmigen Musters, daß jeweils vier Brennelemente eine quadratische Zelle bilden, in deren Mitte sich ein in axialer Richtung beweglicher Steuerstab befindet. Brennelemente am Rand des Kerns, die bei der Bildung dieser quadratischen "Steuerzellen" aus vier um einen Steuerstab herum angeordneten Brennelemente übrig bleiben, werden bei diesem Muster nicht berücksichtigt.

Exkursionen können nur auftreten, solange die Leistung deutlich unter 5 % der Nennleistung des Kernreaktors liegt. Die Erfindung schafft zwei beschränkende Kriterien, die beim Ausfahren der Steuerstäbe bis zu dieser Obergrenze des Anfahrbereichs beachtet werden. Diese Beschränkungen können bereits in das planmäßige Programm, mit dem die Steuerstab-Antriebe angesteuert werden, eingearbeitet sein; es kann aber auch vorgesehen sein, diese Kriterien zur Überwachung des Anfahrvorgangs zu benutzen. Insbesondere kann eine Einrichtung, in der diese Kriterien implantiert sind, der Ansteuerung der Steuerstab-Antriebe vorgeschaltet oder übergeordnet sein.

Die Erfindung geht demnach von einem Verfahren zum Anfahren eines Siedewasser-Reaktors mit einem Reaktorkern aus, über dessen Querschnitt Steuerstäbe in einem einem zweifarbigen Schachbrett entsprechendem Muster, bei dem jedem Feld des Schachbretts ein Steuerstab zugeordnet ist, verteilt sind, wobei die Steuerstäbe im abgeschalteten Zustand des Reaktors in den Reaktorkern eingefahren sind und beim Anfahren wenigstens teilweise aus dem Kern aüsgefahren werden. Nach der DE 1 589 824 B2 dürfen im Reaktor nur Steuerstäbe gleichzeitig eingesetzt oder herausgezogen werden, die Feldern gleicher Farbe entsprechen. Dabei werden diese Steuerstäbe jeweils in Gruppen ganz herausgezogen, jedoch dürfen keine Steuerstäbe gleichzeitig gezogen werden, die einander diagonal benachbart sind. Diese Kriterien sind sehr starr und lassen nicht immer einen optimalen Einsatz der Steuerstäbe zu.

Dagegen werden beim Verfahren nach der Erfindung auch eine Konfiguration durchlaufen, bei der gleichzeitig bewegte Steuerstäbe im Schachbrett-Muster Feldern unterschiedlicher Farbe zugeordnet sind, und/oder eine Konfiguration, bei der praktisch die Hälfte der Steuerstäbe ganz oder teilweise aus dem Reaktorkern herausgefahren ist, und vollständig eingefahrene Steuerstäbe Feldern unterschiedlicher Farbe zugeordnet sind.

Gemäß der Erfindung darf nämlich zum Erreichen einer einen Anfahrbereich begrenzenden Obergrenze der Reaktorleistung ein Steuerstab nur dann ganz oder teilweise aus dem Kern ausgefahren werden, wenn alle Steuerstäbe, die ihm direkt oder diagonal benachbart sind, in Ruhe bleiben. Außerdem bleiben alle Steuerstäbe, die einem ganz oder zumindest teilweise ausgefahrenen Steuerstab direkt benachbart sind, vollständig eingefahren, bis die Obergrenze des Anfahrbereiches des Reaktors erreicht ist oder eine vorgegebene Mindestzahl der Steuerstäbe praktisch vollständig aus dem Reaktorkern herausgefahren ist.

Dadurch wird verhindert, daß kritische Bereiche entstehen, in denen eine Abnahme des Absorbermaterials, die durch das Herausfahren der Steuerstäbe verursacht wird, eine überschüssige, zu einer Exkursion führende Zunahme von thermischen Neutronen auslösen kann. Das wäre der Fall, wenn der Neutronenfluß lokal erheblich bereits von einem einzelnen Steuerstab gedämpft wird, z.B. weil die benachbarten Steuerstäbe bereits vollständig oder zumindest teilweise aus dem Reaktorkern entfernt sind, und dann noch dieser Steuerstab aus dem Reaktorkern entfernt wird. Das Entfernen des Steuerstabes könnte dann lokal einen erheblichen Anstieg des Neutronenflusses auslösen, was die Gefahr einer Exkursion bedeutet. Daher dürfen während des Anfahrens nur Steuerstäbe bewegt werden, die eine geringe Wirksamkeit auf Höhe und Verteilung des Neutronenflusses haben. Ein Einfahren der Steuerstäbe in den Kern, wie z.B. bei einer Reaktorschnellabschaltung, wird nicht behindert, jedoch werden gezielt solche Steuerstäbe für ein Ausfahren aus dem Reaktorkern blockiert, in deren nächster Umgebung bereits so viele Steuerstäbe ganz oder zumindest teilweise aus dem Reaktorkern entfernt worden sind, daß das Entfernen eines weiteren Steuerstabes eine lokale Überhöhung der Neutronendichte zur Folge hätte.

Gleichzeitig ist gemäß der Erfindung eine hohe Flexibilität vorgesehen, die durch allgemeinere. Beschränkungswahl ein Verfahren nach der erwähnten DE 1 589 824 B2 gestattet, bei dem aber auch andere Konfigurationen durchlaufen werden, die das Schachbrettmuster stören.

Erfindungsgemäß können außerdem zum Erreichen einer einen Anfahrbereich begrenzenden Obergrenze der Reaktorleistung gemäß einer ersten Beschränkung nur Steuerstäbe aus dem Reaktorkern ganz oder teilweise ausgefahren werden, deren direkt oder diagonal benachbarte Steuerstäbe nicht ebenfalls in Bewegung sind. Dadurch wird erreicht, daß nicht durch das gleichzeitige Ausfahren benachbarter Steuerstäbe die Reaktivität eines ganzen Bereichs im Reaktorkern zu schnell geändert wird und damit die Ausbildung einer Exkursion erleichtert würde. Dieses Kriterium läßt allerdings zu, daß die Steuerstäbe eines solchen Bereichs nacheinander gezogen werden. Dann würde sich z.B. die Wirksamkeit eines Steuerstabs dadurch erhöhen, daß alle acht benachbarten Steuerstäbe nacheinander gezogen werden.

Das Ziehen dieses letzten Steuerstabs würde dann den Neutronenfluß erheblich ändern; außerdem würde dieser hochwirksame Steuerstab wesentlich stärker belastet.

Um dies zu vermeiden, bewirkt eine zweite Beschränkung, daß direkt benachbarte Steuerstäbe auch nacheinander nicht ohne weiteres gezogen werden können, sondern nur dann, wenn im gesamten Reaktorkern bereits ein erhöhter Neutronenfluß herrscht, weil bereits eine vorgegebene Mindestzahl von Steuerstäben ganz herausgezogen ist oder der Reaktor ohnehin bereits die den Anfahrbereich kennzeichnende Obergrenze der Leistung erreicht hat. In diesem Zustand kann dann aus physikalischen Gründen keine Exkursion mehr auftreten. Dabei braucht ein Steuerstab erst dann als teilweise oder ganz ausgefahren zu gelten, wenn er um mehr als 5 cm aus seiner dem vollständig eingefahrenen Zustand entsprechenden Anfangslage bewegt ist. Entsprechend kann auch der ausgefahrene Zustand definiert werden.

Bevorzugt wird dazu ein Befehl zum Herausbewegen eines Steuerstabes, der zu einem sich zu diesem Zeitpunkt herausbewegenden Steuerstab direkt oder diagonal benachbart ist, gemäß der ersten Beschränkung unterdrückt und zusätzlich die Bewegung aller Steuerstäbe unterbrochen. Dadurch wird verhindert, daß es im Reaktorkern zu starken Flußänderungen kommen kann, während ein bereits freigegebener Schritt des Anfahrprogramms abläuft. Gleichzeitig wird der momentane, sichere Zustand des Reaktorkerns konserviert, der Reaktor also in einem stabilen Zustand gehalten.

Die erste Beschränkung kann auch über den Anfahrbereich hinaus, also im Leistungsbetrieb vorteilhaft sein. Dagegen würde die zweite Beschränkung verhindern, daß der Reaktor voll ausgesteuert werden kann. Diese Beschränkung gilt jedenfalls, solange weniger als die Hälfte, vorzugsweise weniger als eine Anzahl knapp unter der Hälfte, der Steuerstäbe praktisch vollständig aus dem Reaktorkern ausgefahren ist. Bevorzugterweise wird die zweite Beschränkung aufgehoben, sobald wenigstens die Mindestanzahl von Steuerstäben praktisch vollständig aus dem Reaktorkern ausgefahren ist. Der Leistungsbetrieb, der ohnehin keine Exkursionen auslösen kann, wird anschließend ohne diese Beschränkung gesteuert oder geregelt.

Vorteilhafterweise wird die zweite Beschränkung auch dann aufgehoben, wenn wenigstens die den Anfahrbereich begrenzende Obergrenze der Reaktorleistung erreicht wird. Bevorzugterweise liegt die Obergrenze des Anfahrbereiches bei etwa 5 % der Nennleistung des Kernreaktors. Auch nach Überschreiten der Obergrenze ist der Reaktor genügend erwärmt und Leistungsexkursionen können nicht mehr auftreten.

Es ist üblich, die Steuerstäbe nicht nacheinander einzeln, sondern,in Gruppen aus dem Reaktorkern zu fahren. Dadurch kann erreicht werden, daß sich jeweils eine gewünschte Geometrie für den Neutronenfluß einstellt und die Leistungsabgabe in weiten Bereichen des Reaktorkerns in einer zu einer Längsachse eines Steuerstabes senkrechten Querschnittsebene gleichmäßigen Verteilung steigt. Beispielsweise kann man das von den Steuerstäben in der Querschnittsebene des Reaktorkerns gebildeter regelmäßige Muster in Zeilen und Spalten einteilen und ein Muster zugrunde legen, das einem zweifarbigen Schachbrett entspricht. Beim Ziehen der Steuerstäbe kann man dann jeweils auf Steuerstäbe zurückgreifen, die Feldern gleicher Farbe entsprechen. Solange die Steuerstäbe auf den Feldern der zweiten Farbe in ihrer Anfangslage belassen werden, ist die zweite Beschränkung erfüllt. Auf diese Weise kann man unter Beachtung der ersten Beschränkung nacheinander Zustände ansteuern, die jeweils zu einem höheren Neutronenfluß führen, der in einer gewünschten Weise über den Reaktorkern verteilt ist. Hierzu kann man die Felder der ersten Farbe zu Untergruppen zusammenfassen und jeweils die Stäbe einer Untergruppe gleichzeitig ein Stück (oder ganz) aus dem Kern herausfahren. Die entsprechende Aufteilung und Ansteuerung der Steuerstäbe bestimmt jeweils die "Fahrfolge" des Betriebs, die in der Regel durch ein Programm mittels eines sogenannten "Fahrfolge-Rechners" gesteuert wird. Man kann nach ähnlichen Überlegungen aber auch jede (eventuell manuelle) Steuerung der Steuerstäbe überwachen.

Die Erfindung betrifft daher auch das Anfahren eines Siedewasser-Kernreaktors, bei dem über den Querschnitt des Reaktorkerns Steuerstäbe in einem einem regelmäßigen Gitter mit quadratischen Maschen entsprechenden Muster verteilt sind, wobei die Steuerstäbe jeweils über einen Steuerstab-Antrieb von einer Anfangslage, die dem vollständig in den Reaktorkern eingefahrenen Steuerstab entspricht, in eine Endlage, die dem vollständig aus dem Reaktorkern ausgefahrenen Steuerstab entspricht, bewegbar sind und während des Anfahrens gleichzeitig jeweils höchstens einige Steuerstab-Antriebe aktiviert und andere Stauerstab-Antriebe verriegelt sind. Erfindungsgemäß wird bei der Verriegelung der steuerstab-Antriebe überwacht, daß erstens die Steuerstab-Antriebe von Steuerstäben, die einander direkt oder diagonal benachbart sind, nicht gleichzeitig aktivierbar sind, und daß zweitens bei jedem Steuerstab, der nicht mehr in der Anfangslage ist, die Antriebe der direkt benachbarten Steuerstäbe nicht aktivierbar sind, bevor eine vorgegebenen Mindestzahl von Steuerstäben in der Endlage ist oder die Reaktorleistung eine für den Anfahrvorgang vorgegebene Obergrenze erreicht.

Bei einem zweifarbigen Schachbrett-Muster haben die einem Feld der ersten Farbe diagonal benachbarten Felder jeweils die gleiche Farbe. Das erste Kriterium überwacht bereits, daß das Anfahren nur mit Steuerstäben begonnen wird, die nicht benachbart sind. Für jeden solchen Stab wird auch anschließend überwacht, daß in einem Bereich, der mindestens mehrere einander benachbarte Steuerstäbe umfaßt die Antriebe der Steuerstäbe in zwei Gruppen, die entsprechend den unterschiedlich gefärbten Feldern eines Schachbretts über den Bereich verteilt sind, überwacht werden, wobei die Antriebe der einen Gruppe verriegelt bleiben und höchstens die Antriebe der anderen Gruppe aktivierbar sind. Die beiden Überwachungsregeln erlauben, daß stufenweise alle Steuerstäbe einer Gruppe aus dem Reaktorkern gezogen werden, wobei die Anzahl der Steuerstäbe die zunächst in ihrer Anfangslage verbleiben müssen, dann am kleinsten ist, wenn sich die genannten einzelnen Bereiche zu einem einheitlichen, den ganzen Kern überdeckenden zweifarbigen Schachbrett-Muster überlappen. Dies ermöglicht besonders übersichtliche Fahrfolgen, die ohne Gefahr von Exkursionen ein rasches Anfahren erlauben. Schließlich wird so praktisch die Hälfte der Steuerstäbe aus dem Reaktorkern entfernt und damit das zweite Kriterium außer Kraft gesetzt. Die Steuerstab-Antriebe der anderen Gruppe sind dann nicht mehr gesperrt und es können Fahrfolgen für den Leistungsbereich Oberhalb des Anfahrbereiches, welche auch die übrigen Steuerstäbe umfassen können, initiiert werden. Wird die erwähnte Mindestzahl etwas unter die halbe Anzahl der vorhandenen Steuerstäbe gelegt, so können auch einzelne Steuerstab-Antriebe ausfallen, ohne die Aufhebung der zweiten Bedingung zu behindern. Die gleichmäßige Erwärmung des Reaktorkerns und der reibungslose Übergang in den Leistungsbetrieb wird dadurch praktisch nicht behindert.

Weitere vorteilhafte Ausführungen des Überwachungsverfahrens ergeben sich analog aus den bereits beschriebenen, vorteilhaften Varianten des Verfahrens zum Anfahren des Siedewasser-Reaktors.

Eine Einrichtung zur Steuerung eines Siedewasser-Kernreaktors enthält also Steuerstäbe, die über den Reaktorkern des Reaktors nach einem einem zweifarbigen Schachbrett entsprechenden Muster verteilt, bei dem jedem Feld des Schachbretts ein Steuerstab zugeordnet ist, wobei jeder Steuerstab mit einem Steuerstab-Antrieb von einer Anfangslage in eine Endlage ausfahrbar ist. Ein Steuerstab-Fahrrechner steuert das Ausfahren der Steuerstäbe. Zudem ist erfindungsgemäß eine Überwachungseinheit vorgesehen, die eine Konfiguration, bei der gleichzeitig bewegte Steuerstäbe im Schachbrett-Muster Feldern unterschiedlicher Farbe zugeordnet sind und/oder eine Konfiguration bei der praktisch die Hälfte der Steuerstäbe ganz oder teilweise aus dem Reaktorkern ausgefahren ist, und noch vollständig eingefahrene Steuerstäbe Feldern unterschiedlicher Farbe zugeordnet sind, zuläßt, und die erstens für jeden zum Ausfahren angewählten Steuerstab eine erste Sperrzone definiert, in der alle Antriebe für die dem ausgewählten Steuerstab direkt oder diagonal benachbarten Steuerstäbe erfaßt und nicht aktivierbar sind, und zweitens bei jedem Steuerstab, der sich praktisch nicht mehr in der Anfangslage befindet, eine zweite Sperrzone definiert, in der alle Antriebe der Steuerstäbe, die direkt benachbart zu diesem bereits nicht mehr in der Anfangslage befindlichen Steuerstab sind, erfaßt und nicht aktivierbar sind. Bevorzugt besteht die erste Sperrzone nur aus den direkt oder diagonal benachbarten Steuerstäben bzw. Antrieben; entsprechend besteht vorzugsweise die zweite Gruppe nur aus den direkt benachbarten Steuerstäben bzw. Antrieben.

Als Fahrfolgen für das Ein- und Ausfahren der Steuerstäbe in und aus dem Reaktorkern sind prinzipiell eine Vielzahl von (teilweise automatisch ablaufenden) Programmen denkbar, die jeweils die entsprechende Aktivierung der Steuerstab-Antriebe (und eventuell weiterer Stellglieder oder Peripheriegeräte, z.B. Kühlmittelpumpen) definieren. Unter Berücksichtigung der physikalischen Daten des Reaktorkerns ist - häufig mit Hilfe eines Physikrechners, der jeweils bei einer Nachladung der Brennelemente mit der vorgegebenen Reaktivitätsverteilung des Kerns und ähnlichen physikalischen Parametern gespeist ist.im Fahrrechner ein praktisch optimales Fahrprogramm zusammengestellt und hinterlegt, dessen einzelne Programmstufen manuell und/oder automatisch mittels Rückmeldungen von Stellgliedern bzw. von im Reaktorkern gemessenen Ist-Größen freigegeben werden. Dadurch kann der Reaktor stufenweise in den Leistungsbetrieb überführt werden.

Um bei der Steuerung des Siedewasser-Reaktors nur erwünschte Übergangszustände zuzulassen (insbesondere Exkursionen im Anfahrbereich des Reaktors zu vermeiden), ist zwischen den Steuerstab-Fahrrechner und die Antriebe der Steuerstäbe die Überwachungsstufe geschaltet, z.B. eine eigene Baueinheit. Diese Überwachungseinheit ist vom Steuerstab-Fahrrechner unabhängig und überwacht die Einhaltung der ersten und zweiten Sperrzone, in der die Antriebe der Steuerstäbe nicht aktiviert werden können. Generell ist es aber auch möglich, eine entsprechende Überwachungsstufe in den Rechner bzw. dessen Software zu integrieren.

Vorteilhafterweise sind die Antriebe der Steuerstäbe jeweils durch ein Anwahlsignal ansteuerbar und aktivierbar, wobei durch die Überwachungseinheit in jedem Fall, in dem zu einem Zeitpunkt Anwahlsignale für einen ersten Steuerstab und einen in der ersten Sperrzone dieses ersten Steuerstab liegenden Zweiten Steuerstab anliegen, die Antriebe beider Steuerstäbe verriegelt werden. Es kann also nicht zum Ausfahren benachbarter Steuerstäbe aus dem Kern kommen und es kann kein Bereich mit stark erhöhtem Neutronenfluß entstehen, der beispielsweise zu einer Leistungsexkursion führen könnte. Bevorzugt werden mit der Verriegelung, der Antriebe des ersten und des zweiten Steuerstabes die Anwahlsignale aller Steuerstab-Antriebe gelöscht. Der Reaktor verharrt also in einem Zustand ohne Gefahr durch Exkursionen, bis beispielsweise vom Bedienpersonal wieder eine Steuerstab-Fahrfolge freigegeben wird, die ebenfalls erst nach einer entsprechenden Überwachung wirksam werden kann.

Bevorzugt ist im Steuerstab-Fahrrechner ein Programm zur Auswahl und Ansteuerung der Steuerstab-Antriebe des Reaktors aktivierbar. Im Fall, daß zwei Antriebe zum gleichen Zeitpunkt ausgewählt sind, wobei der Steuerstab eines der ausgewählten Antriebe in der ersten Sperrzone des vom anderen ausgewählten Antrieb ausfahrbaren Steuerstabs liegt, ist zusammen mit der Anwahl der beiden Antriebe auch das bereits aktivierte Programm mittels der Überwachungseinheit löschbar. Dadurch wird verhindert, daß beispielsweise ein von einem Programm zur Fahrfolgesteuerung von Steuerstäben ausgehender Fehler Folgefehler in der vom Programm gesteuerten Fahrfolge induzieren könnte. Nach dem Löschen aller Anwahlen und des momentan arbeitenden Programms kann beispielsweise vom Bedienpersonal eine neue Fahrfolge von Hand eingeleitet werden oder ein neues Fahrfolgeprogramm gestartet werden. Wird die Anwahl eines Steuerstab-Antriebes durch die Überwachungseinheit gelöscht, so wird vorteilhaft dieser Antrieb derart blockiert, daß der betroffene Steuerstab nicht mehr in Richtung auf seine Endstellung außerhalb des Reaktorkerns verfahrbar ist; ein Einfahren wird dabei nicht verhindert.

Um flexible Fahrfolgen der Steuerstäbe des Reaktors außerhalb des Anfahrbereiches des Reaktors zur ermöglichen, ist die Überwachung jeder zweiten Sperrzone eines Steuerstabes durch ein Leistungssignal aufhebbar, das eine Leistung des Reaktors anzeigt, die über einer Obergrenze für den Anfahrbereich, insbesondere über 5 % der Nennleistung, liegt. Weiter ist es vorteilhaft, wenn die Überwachung jeder zweiten Sperrzone eines Steuerstabes durch Positionssignale aufhebbar ist, die anzeigen, daß eine vorgegebene Mindestanzahl der Steuerstäbe praktisch in ihrer Endlage ist. Der Neutronenfluß ist dann bereits im gesamten Reaktorkern hoch und der Reaktor soweit erwärmt, daß die dem Brennstoff inhärente Reaktivitäts-Rückkopplung ausreichend stabilisierend wirkt und in den normalen Leistungsbetrieb übergegangen werden kann.

vorteilhafterweise ist diese Mindestzahl höchstens gleich der Hälfte der Gesamtzahl, vorzugsweise knapp unter der Hälfte der Gesamtzahl der Steuerstäbe, um eventuelle Komponentenausfälle (z.B. Ausfall eines Endlagenschalters) tolerieren und weitere Fahrfolgen für die Steuerstäbe, ohne die Beschränkungen durch die zweite Sperrzone jedes Steuerstabs, initiieren zu können.

Die Verfahren zum Anfahren und Überwachen sowie die Einrichtung zur Steuerung eines Siedewasser-Kernreaktors verhindern weitgehend das Auftreten von Exkursionen im Anfahrbereich des Kernreaktors, weisen aber eine hohe Flexibilität auf.

So sind sogenannte Gruppenwahlüberwachungen möglich, bei denen jeder Steuerstab jeweils nur einer Gruppe angehört. Die vier ihm diagonal benachbarten Steuerstäbe gehören dann einer zweiten Gruppe, zwei ihm direkt benachbarte und diametral einander gegenüberliegende Steuerstäbe einer dritten Gruppe und die beiden anderen, ihm direkt benachbarten Steuerstäbe einer vierten Gruppe an. Geht man von einem "weißen" Feld der ersten Gruppe aus, so sind demnach alle vier diagonal benachbarten Felder ebenfalls "weiß" und gehören der zweiten Gruppe an. Die vier direkten Nachbarn gehören aber zwei unterschiedlichen Gruppen, nämlich der dritten und der vierten Gruppe, an. Dabei dürfen stets nur Steuerstäbe der gleichen Gruppe gleichzeitig bewegt werden, wobei aber alle Steuerstäbe entweder aller "weißen" oder aller "schwarzen" Felder zunächst in der Ausgangslage verbleiben müssen. Dabei kann vorgesehen werden, daß zunächst alle Steuerstäbe einer Gruppe nacheinander oder gleichzeitig in die Endlage gebracht werden, bevor die nächste Gruppe bewegt wird.

Die Erfindung ist jedoch flexibler und verhindert zwar durch die erste Beschränkung, daß diagonal oder direkt einander benachbarte Steuerstäbe gleichzeitig bewegt werden, jedoch können vorteilhaft nach der zweiten Beschränkung Fahrfolgen vorgesehen werden, bei denen ein erster Steuerstab zunächst nur teilweise herausgefahren und anschließend mindestens ein diagonal benachbarter Steuerstab herausgefahren wird, bevor der erste Steuerstab endgültig in seine Endlage gebracht wird.

Es genügt nämlich, daß in jeder Reihe aus unmittelbar nebeneinander stehenden Steuerstäben jeweils zwischen zwei Steuerstäben, die aus ihrer Anfangslage bewegt werden sollen, immer. mindestens ein noch in der Anfangslage belassener Steuerstab steht, und ebenso für jede zu diesen Längsreihen senkrechte Querreihe aus unmittelbar hintereinander stehenden Steuerstäben. Ein einheitliches, den ganzen Kern überdeckendes Schachbrett-Muster ergibt sich, wenn im Anfahrbetrieb jeweils ein für das Herausfahren zugelassener Steuerstab mit genau einem in der Anfangslage zu belassenden Steuerstab abwechselt; jedoch sieht die Erfindung auch Muster vor, bei denen vereinzelt zwei oder mehr in der Anfangslage belassene Steuerstäbe direkt nebeneinander stehen können, wobei erst dann begonnen wird, auch die zunächst in der Anfangsstellung belassenen Steuerstäbe herauszufahren, wenn die Leistung des Kerns bereits die erwähnte Obergrenze des Anfahrbereichs erreicht hat und/oder eine ausreichende Zahl der Steuerstäbe in ihre Endstellung gebracht sind.

Diese Flexibilität erlaubt neben planmäßigen Steuerstab-Fahrfolgen, wie z.B. dem Anfahren des Reaktors, auch betriebliche Sondervorgänge, wie z.B. Fahrfolgenwechsel im Leistungsbetrieb, Steuerstabtests beim Beladen des Reaktorkerns oder Scramzeitbestimmungen für nicht fahrfolge-konforme Steuerstabgruppierungen, ohne daß die erfindungsgemäßen Beschränkungen umgangen werden müssen.

Nachfolgend wird die Erfindung anhand von Ausführungsbeispielen und Figuren näher erläutert. Es zeigen die Figuren in schematischer Darstellung:
- FIG 1: Eine Einrichtung zur Steuerung eines Kernreaktors;
- FIG 2: eine Hardware-Schaltung in der Anwahl-Leitung eines Steuerstabes;
- FIG 3: eine Querschnittsfläche eines Reaktorkerns mit einigen der in einem regelmäßigen Gitter angeordneten Brennelemente und Steuerstäbe sowie einer ersten Sperrzone;
- FIG 4: eine Querschnittsfläche eines Reaktorkerns mit in einem regelmäßigen Gitter angeordneten Brennelementen und Steuerstäben sowie einer zweiten Sperrzone eines einzelnen Steuerstabs;
- FIG 5: eine Querschnittsfläche eines Reaktorkerns mit nach einem regelmäßigen Schachbrett-Muster ausgefahrenen Steuerstäben;
- FIG 6: eine Querschnittsfläche eines Reaktorkerns einer anderen Konfiguration mit ausgefahrenen Steuerstäben;
- FIG 7: einen nach einem abweichenden Muster entstandenen Kernquerschnitt.

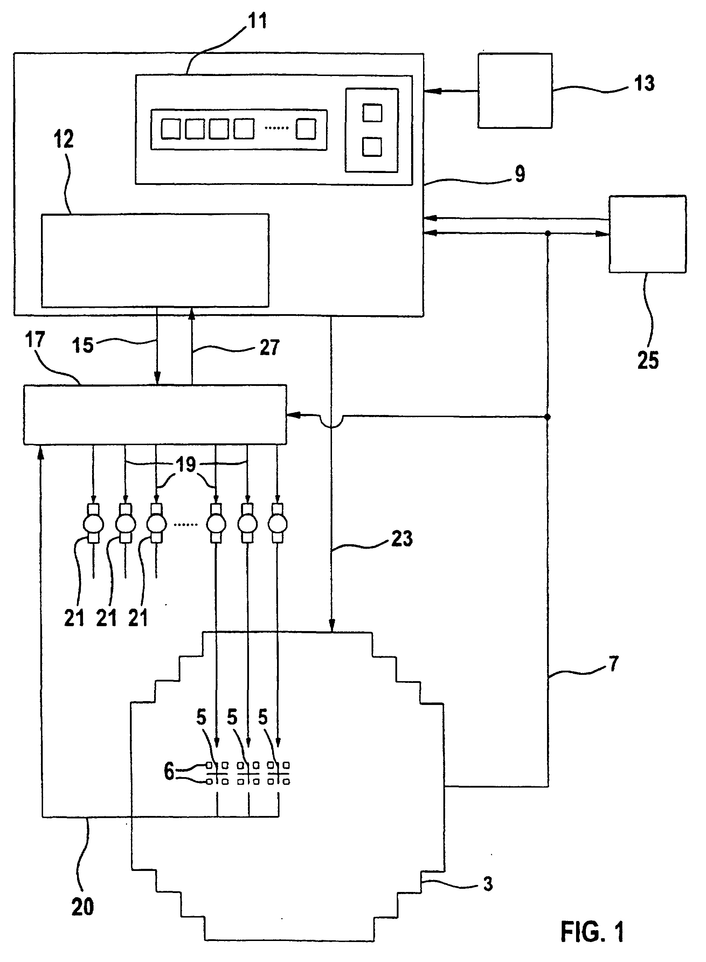

Figur 1 zeigt eine schematische Darstellung einer Einrichtung 1 zur Steuerung eines Siedewasser-Kernreaktors, mit einem Reaktorkern 3 und Steuerstäben 5, von denen zur einfacheren Darstellung nur drei gezeigt sind. Jeder Steuerstab 5 weist einen kreuzförmigen Querschnitt auf und ist von jeweils vier Brennelementen 6 umgeben, die in den vier Quadranten einer dem Steuerstab zugeordneten Zelle liegen.

Nicht dargestellt sind die für den Reaktorbetrieb üblichen Meßglieder (z.B. über den Reaktorkern verteilte γ- oder Neutronen-Detektoren) und Peripherie-Geräte (z.B. Kühlwasser-Pumpen), die entsprechende Meßwerte und Rückmeldungen über Datenleitungen 7 an ein Steuer- und Leitsystem 9 abgeben, in dem die wichtigsten Betriebsdaten (z.B. der Ist-Wert der Reaktorleistung bzw. des Neutronenflusses) an einem Steuerpult 11 angezeigt werden, an dem auch Freigabe- und Steuerbefehle (z.B. über einen Auf/Ab-Schalter zum Erhöhen oder Absenken eines Leistungs-Sollwertes) eingegeben werden können.

Eine Handsteuerung 13 ermöglicht Sondermaßnahmen (z.B. Steuerstab-Tests), jedoch ist der Normal-Betrieb über einen Fahrrechner 12 programmgesteuert, der über eine Anwahlleitung 15 die entsprechenden Aktivierungsleitungen 19 für die Steuerstab-Antriebe 21 speist. Auch die Peripherie-Geräte können über Steuerleitungen 23 von dem Steuer- und Leitsystem 9 gesteuert oder geregelt werden.

Die Konfiguration des Kerns und andere Grunddaten des Reaktors (z.B. die Verteilung verschieden angereicherter und abgebrannter Brennelemente, die zu Beginn eines Betriebszyklus eingesetzt werden) sind in einem Physik-Rechner 25 hinterlegt, der die geeigneten Fahrfolgen für den Leistungsbetrieb und auch den Anfahrbetrieb festlegt. Die einzelnen Schritte des Programms werden vom Fahrrechner 12 koordiniert und gesteuert, wobei eine Überwachungsstufe sicherstellt, daß nur solche Steuerstab-Antriebe 21 aktiviert werden, bei denen Bewegungen, die in Richtung von der Anfangslage zur Endlage der Steuerstäbe verlaufen, und eine entsprechende Stellung der Steuerstäbe miteinander verträglich sind.

Diese Überwachungsstufe kann als Software im Rechner integriert sein, wobei aus Sicherheitsgründen diese Software als Endkontrolle sowohl der nach einem Programm des Fahrrechners 12 ermittelten Fahrfolge als auch der Handsteuerung überlagert sein sollte.

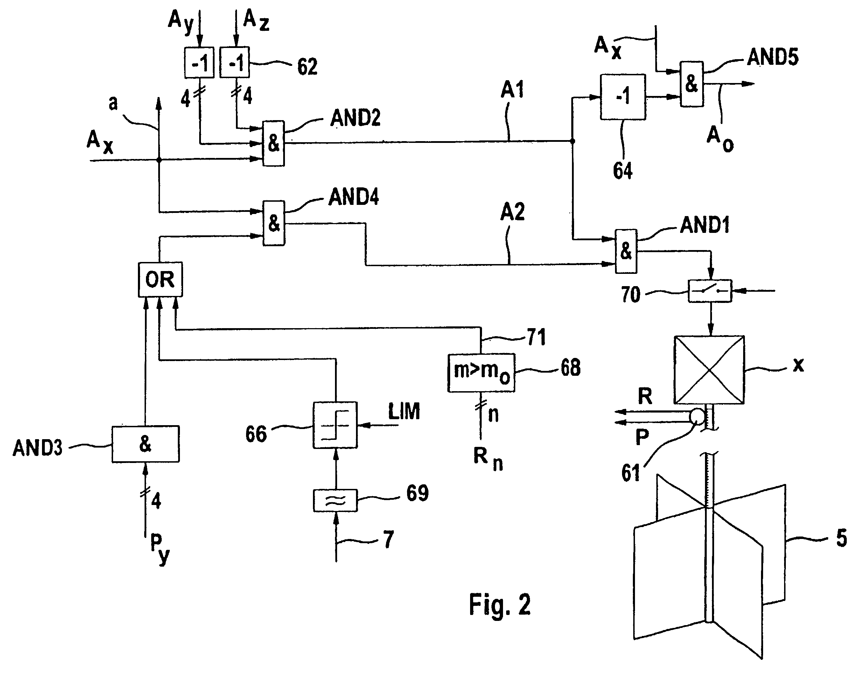

In Figur 1 ist eine eigene, in Hardware realisierte Überwachungseinheit 17 dargestellt, deren Funktion in Figur 2 für einen der Steuerstäbe schematisch erläutert ist.

Der kreuzförmige Steuerstab 5 ist über einen Schaft durch seinen Antrieb X in axialer Richtung verfahrbar. Ein Positionsdetektor 61 gibt ein Anfangslage-Signal P oder ein Endlage-Signal R ab, wenn der Steuerstab 5 praktisch völlig in den Kern hinein bzw. aus dem Kern herausgefahren ist. Dabei werden Abweichungen bis zu 5 cm vom Anfangs- oder Endzustand noch toleriert. Ein Ansteuersignal Aₓ, das über den Ausgang a auch den der Figur 2 entsprechenden Schaltungen für die anderen Steuerstab-Antriebe zugeführt wird, aktiviert den Antrieb X nur, wenn zwei Bedingungen erfüllt sind, die durch entsprechende Überwachungssignale A1 und A2 und ein UND-Gatter AND1 miteinander verknüpft werden:
a) Weder ein direkt noch ein diagonal benachbarter Steuerstab wird bewegt. Geht man von einem Schachbrett-Muster mit weißen und schwarzen Feldern aus, so sind einem "weißen" Steuerstab vier "schwarze" Steuerstäbe - oder, wenn der Steuerstab am Rand sitzt, zwei oder drei "schwarze" Steuerstäbe - direkt benachbart und können mit Y bezeichnet werden. Entsprechend sind dem "weißen" Steuerstab auch ein bis vier andere "weiße" Steuerstäbe Z diagonal benachbart. Wird ein Steuerstab durch ein binäres Signal "1" angesteuert, so werden die entsprechenden Ansteuersignale A_{y} und A_{z} aller benachbarten Steuerstäbe Y und Z durch Negationsglieder 62 invertiert und das Ansteuersignal Aₓ des Steuersignals wird durch das UND-Gatter AND2 blockiert, wenn auch nur einer der Steuerstäbe X und Y gleichzeitig angesteuert und aktiv ist.
b) Alle direkt benachbarten Steuerstäbe, also alle Stäbe Y, befinden sich praktisch noch in der Anfangslage. Entsprechend werden die Positionssignale Py aller Stäbe Y in einem UND-Gatter AND3 verknüpft, dessen Ausgangssignal über ein UND-Gatter AND4 das Ansteuersignal freigibt bzw. gegebenenfalls blockiert.

Ob die Bedingung a) zu einer Blockierung des Antriebs X geführt hat, kann durch ein UND-Gatter AND5 festgestellt werden, dem das Ansteuersignal Aₓ direkt und das Aktivierungssignal Al über ein Negationsglied 64 zugeführt ist. Auf diese Weise wird ein Rückmeldesignal Aₒ gebildet, das über eine Rückmeldeleitung 27 (Figur 1) alle Ansteuerungen durch den Fahrrechner rücksetzt und auch die im Fahrrechner selbst aktivierte Fahrfolge löscht.

Dadurch sind alle Antriebe blockiert und die Steuerstäbe können nicht weiter herausgefahren werden. Vielmehr können sie nur noch in den Kern eingefahren werden, z.B. weil eine (nicht dargestellte) Sicherheitseinrichtung einen unzulässig angewachsenen Neutronenfluß bzw. eine Exkursion detektiert hat und eine Reaktorschnellabschaltung einleitet.

Die Bedingung b) und wahlweise auch die Bedingung a) wird außer Kraft gesetzt, sobald ein entsprechender Ist-Wert der Reaktorleistung, der an der Leitung 7 (Figur 1) abgegriffen ist, einen für die Obergrenze des Anfahrbereichs vorgegebenen Grenzwert LIM (z.B. 5 % der NennLeistung) überschreitet. Ein entsprechendes Grenzwert-Glied 66 ist mit dem Ausgang des Gatters AND3 über ein ODER-Gatter OR verknüpft, das dem Gat-. ter AND4 zur Freigabe des Ansteuersignals Aₓ vorgeschaltet ist.

Die zweite Bedingung ist aber auch außer Kraft, wenn die Positionssignale R, aller Steuerstäbe (Gesamtzahl n) anzeigen, daß die Anzahl m der Steuerstäbe, die sich praktisch in der Endlage befinden, über einer Mindestanzahl mₒ liegt (Abfrage 68). Diese Mindestanzahl mₒ ist kleiner als nₒ/2 (Hälfte der Gesamtzahl n). Daher ist auch die Abfrage 68 auf den Eingang des ODER-Glieds OR geschaltet.

Ferner sind durch ein Glättungsglied 69 Mittel angedeutet, die eine Freigabe des Signals A2 bei kurzzeitigen Leistungserhöhungen verhindern. Vielmehr muß, z.B. bei einer Exkursion, deren Selbststabilisierung mit einem solchen schnellen Anstieg der Leistung verbunden ist, eine Sicherheitsschalteinrichtung 70 ein schnelles Einfahren aller Steuerstäbe ermöglichen.

Beim Anfahren des Reaktors können vom Bedienpersonal die zu den Programmschritten des Anfahrprogramms gehörenden Steuerstab-Konfigurationen innerhalb des im Fahrrechner 12 aktivierten Anfahrprogramms nacheinander freigegeben werden. Die Auswahlleitung überträgt dann die ausgewählte und freigegebene Fahrfolge an die Überwachungsstufe 17, die dann über die Leitungen 19 die entsprechenden Antriebe 21 aktiviert (oder bei unzulässigen Steuerstab-Auswahlen blockiert).

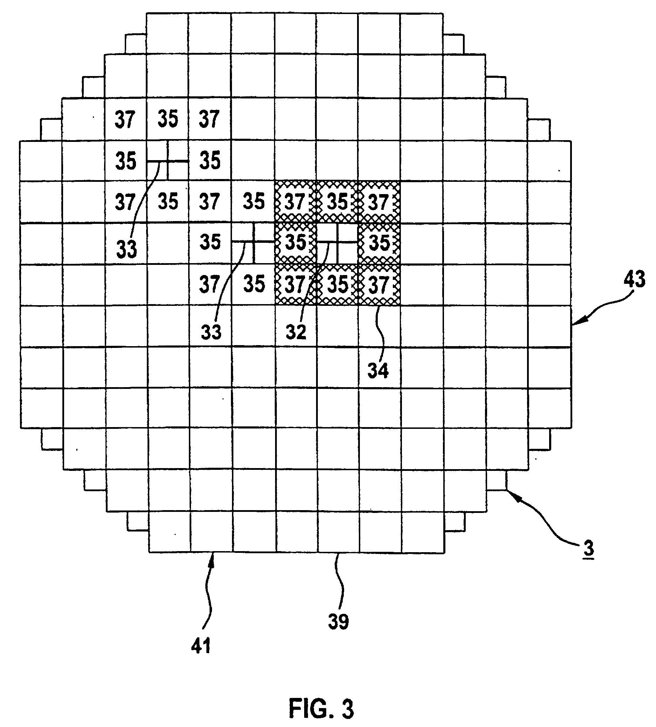

In Figur 3 ist eine zu einer Längsachse eines ausfahrenden Steuerstabes 32 senkrecht stehende Querschnittsfläche des Reaktorkerns gezeigt, in der die Steuerstäbe des Reaktors in einem regelmäßigen Muster 39 angeordnet sind. Das Muster 39 überdeckt die gezeigte Querschnittsfläche des Reaktorkerns 3 gitterartig und führt zu einer Anordnung der Steuerstäbe, von denen beispielhaft noch zwei weitere Steuerstäbe 33 dargestellt sind, in Querreihen 41 und Längsreihen 43 in der Art einer Matrix (Schachbrett).

In der Überwachungseinheit 17 ist für jeden Steuerstab durch eine eigene, der Figur 2 entsprechende Logik eine erste Sperrzone 34 definiert. Für den Steuerstab 32 umfaßt diese erste Sperrzone 34 die vier direkt benachbarten Steuerstäbe (bei Figur 2 mit Y bezeichnet) und die vier diagonal benachbarten Steuerstäbe (bei Figur 2 mit Z bezeichnet). Werden also gleichzeitig die Steuerstäbe 32 und 33 gezogen, so bestehen die dazugehörenden Sperrzonen aus den direkt benachbarten Steuerstäben 35 und den diagonal benachbarten Steuerstäben 37. Wird vom Steuerstab-Fahrrechner 12 ein zu einem ausfahrenden Steuerstab direkt bzw. diagonal benachbarter Steuerstab 35 bzw. 37 angewählt, so unterdrückt die Überwachungseinheit 17 diesen Befehl und sperrt gleichzeitig sämtliche Steuerstab-Antriebe 21 aller ausfahrenden Steuerstäbe; also werden auch die gerade ausfahrenden Steuerstäbe 32 und 33 gestoppt.

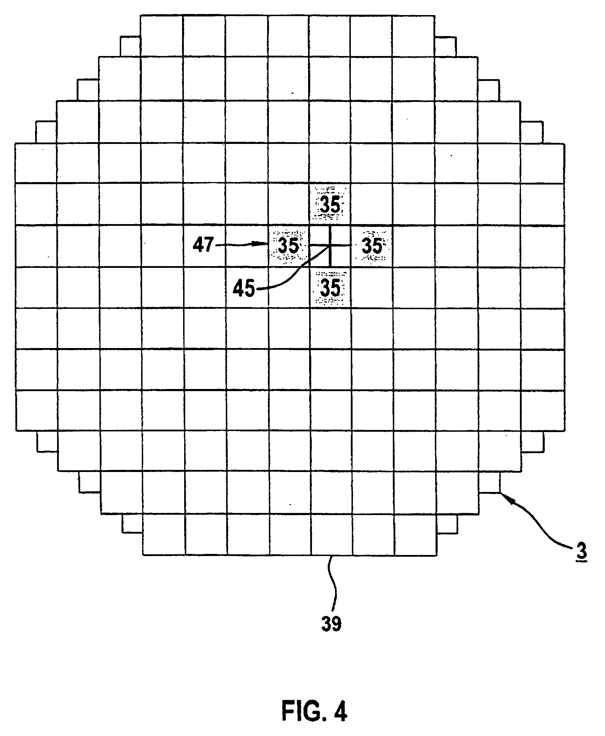

In Figur 4 ist die Querschnittsfläche des Reaktorkerns 3 aus Figur 3 mit einem bereits nicht mehr vollständig in den Kern eingefahrenen Steuerstab 45 und dem matrixartigen Muster 39 dargestellt. In der Überwachungseinheit 17 ist für jeden nicht vollständig in den Reaktorkern eingefahrenen Steuerstab 32 im Anfahrbereich des Reaktors eine zweite Sperrzone 47 (grau unterlegt) definiert, die aus allen direkt benachbarten Steuerstäben 35 besteht. Als nicht vollständig in den Kern eingefahren gelten sämtliche Steuerstäbe 32, die wenigstens 5 cm aus ihrer Anfangslage in Richtung Endlage (d.h. außerhalb des Reaktorkerns 3) verfahren sind. Die Information über die Position jedes einzelnen Steuerstabes erhält die Überwachungseinheit 17 über die Signalleitung 20 (Figur 1) an denen das sogenannte Ausfahrlängensignal S anliegt, welches die Länge angibt, um die ein Steuerstab aus seiner Anfangslage in Richtung Endlage verfahren ist, und den Positionssignalen P und R bei Figur 2 entspricht.

Diese zweite Sperrzone 47 um jeden nicht vollständig eingefahrenen Steuerstab 32 wird von der Überwachungseinheit 17 erst dann gelöscht, wenn über die Signalleitung 20 bzw. 71 angezeigt wird, daß sich eine Mindestzahl mₒ von Steuerstäben 32 in ihrer Endlage außerhalb des Reaktorkerns 3 befindet. Diese Mindestanzahl mₒ liegt knapp unterhalb der Hälfte aller Steuerstäbe im Reaktorkern 3. Damit können Steuerstäbe , die einem nicht vollständig in den Kern eingefahrenen Steuerstab 32 benachbart sind, erst dann aus dem Reaktorkern 3 ausgefahren werden, wenn praktisch die Hälfte aller Steuerstäbe bereits aus dem Reaktorkern 3 ausgefahren ist. Wegen der genannten Bedingungen liegt dann aber eine Konfiguration vor, bei der die im Reaktorkern 3 verbliebenen Steuerstäbe 35 nur begrenzte Steuerstab-Wirksamkeiten besitzen.

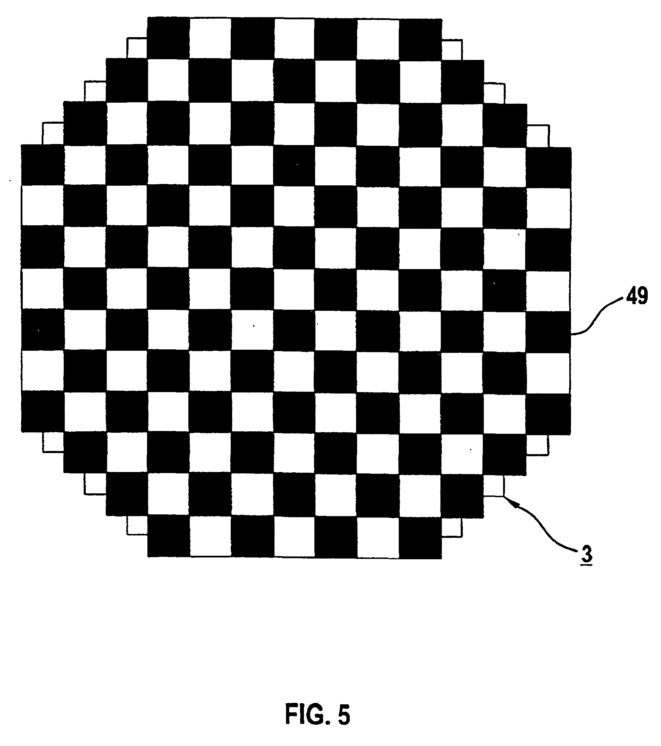

In Figur 5 ist der Fall gezeigt, in dem alle Steuerstäbe zu einer der beiden "Farben" eines vollständigen Schachbrett-Musters 49 gehören, und der Kern 69 "weiße" und 76 "schwarze" Steuerstäbe enthält. Die Bedingung b) läßt zu, daß gleichzeitig oder in Gruppen nacheinander alle "schwarzen" Steuerstäbe gezogen werden, solange die "weißen" Stäbe in der Anfangslage verbleiben. Wenn alle "schwarzen" Steuerstäbe die Endlage erreicht haben, sind also mehr als mₒ Steuerstäbe aus dem Reaktorkern ausgefahren und die Reaktorleistung steigt auf mehr als 5 % der Nennleistung. Die Überwachungseinheit 17 löscht dann alle Sperrzonen 47 (Figur 4) um die ausgefahrenen Steuerstäbe, damit die übrigen Steuerstäbe beispielsweise zum Erreichen einer höheren Leistungsabgabe des Reaktorkerns ausgefahren werden können. Auch in diesem Leistungsbetrieb bleibt die Bedingung a) wirksam.

Die Bedingung a) zwingt allerdings dazu, daß zunächst nur mit dem Ausfahren einiger "weißer" Steuerstäbe begonnen wird, die einander nicht diagonal benachbart sind. Die "weißen" Steuerstäbe sind also in Gruppen, die in der Regel mindestens vier Steuerstäbe enthalten, unterteilt und werden gruppenweise angewählt, wobei es vorteilhaft sein kann, die Steuerstäbe jeweils nur schrittweise herauszuziehen und nach einigen Schritten die Gruppeneinteilung zu ändern.

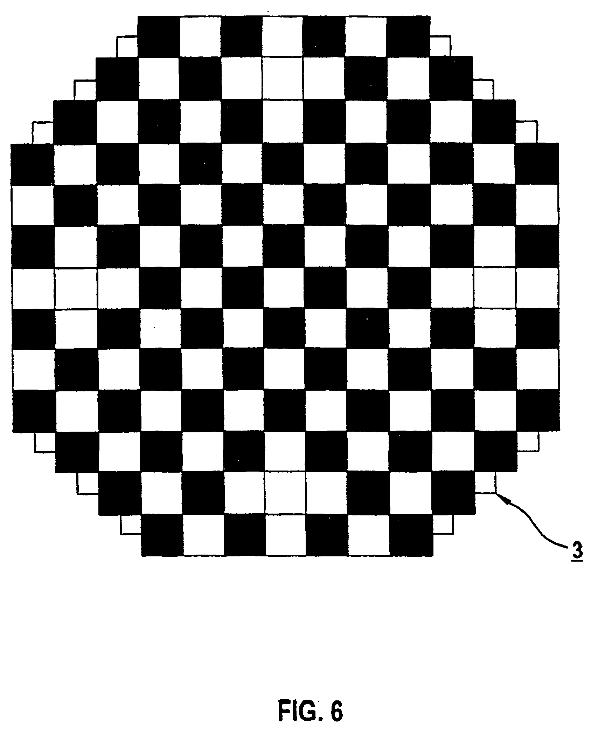

In Figur 6 ist eine am Ende des Anfahrbetriebes angesteuerte Konfiguration gezeigt, bei dem ebenfalls zunächst mit dem Herausfahren einiger "schwarzen" Steuerstäbe begonnen wurde, jedoch eine Untergruppe aus vier Steuerstäben nicht als vollständig ausgefahren gilt - sei es, weil die ordnungsgemäße Rückmeldung mindestens einer Steuerstabstellung ausblieb und deshalb auf die weitere Aktivierung einer entsprechenden Untergruppe von Antrieben verzichtet wurde, sei es, weil ein Fahrprogramm ohne diese Steuerstäbe günstiger ist. Um den Grenzwert LIM der Reaktorleistung beim Anfahren sicher zu erreichen, genügt es, wenn bereits 65 Steuerstäbe vollständig ausgefahren sind (d.h. mₒ = 65), so daß der Anfahrvorgang auch mit "weißen" Steuerstäben hätte begonnen werden können und auch dann ein Verzicht auf einige Steuerstäbe den Übergang in den Leistungsbetrieb nicht beeinträchtigt hätte.

Überzieht man den ganzen Kern mit einem zweifarbigen Schachbrett-Muster, so ist nicht immer die Anzahl der Felder der einen Farbe gleich der Anzahl der Felder der anderen Farbe, sondern eine Farbe in der Minderheit. Man kann die erwähnte Mindestzahl mₒ so wählen, daß beim Herausfahren der Stäbe dieser "Farbe der Minderheit" etwa vier Stäbe nicht benötigt werden und trotzdem die Zahl der nach Bedingung b) herausfahrbaren Stäbe den Wert mₒ erreicht. Im Fall der Figuren 3 bis 7 ist demnach mₒ = 65 möglich, wobei das vollständige Herausfahren von 65 Steuerstäben dazu führt, daß sich der Reaktor merklich erwärmt, eine Exkursion aus physikalischen Gründen nicht mehr möglich ist und die Leistung in den für den normalen Betrieb vorgesehenen Steuerbereich ansteigt. Selbst wenn es im Einzelfall erforderlich sein sollte, auf eine Steuerfolge überzugehen, bei der bestimmte Untergruppen der Steuerstäbe nicht vollständig herausfahren (vergleiche Figur 6), so gibt es praktisch auch für m < mₒ noch immer Konfigurationen, die zu einem Leistungsanstieg auf den Grenzwert LIM für den Normalbetrieb führen. Dies ermöglicht eine hohe Flexibilität.

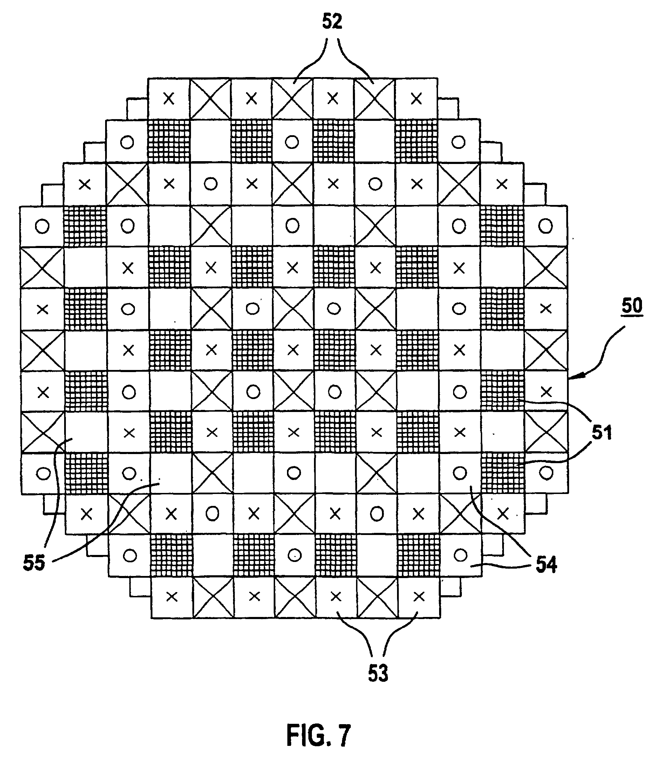

Als ein Beispiel für eine Konfiguration, die von einem einheitlichen, zweifarbigen Schachbrett-Muster abweicht und nach den genannten Kriterien zulässig ist, ist in Figur 7 ein Kern 50 gezeigt, bei dem eine Gruppe aus Steuerstäben 51 bereits in die Endlage verfahren ist und beim Herausfahren einer Gruppe aus Steuerstäben 52 die Leistung des Reaktors den Wert LIM = 5 % der Nennleistung bereits übersteigt, wie sich aus der vorgegebenen Verteilung der individuell unterschiedlichen Reaktivität der eingesetzten Brennelemente in dem zugrunde gelegten Fall ergibt. Die Figur 7 zeigt, daß um jeden der Steuerstäbe 51 und 52 eine Sperrzone während des Anfahrens eingehalten ist, die jeweils aus den vier direkt benachbarten Steuerstäben besteht, die jeweils alle noch in der Anfangslage gehalten sind.

Um den Reaktor auf volle Leistung zu bringen, sind die noch in der Anfangslage verbliebenen Steuerstäbe 53, 54 und 55 in drei weitere Gruppen unterteilt. Es ist ersichtlich, daß innerhalb jeder einzelnen Gruppe eine weitere Sperrzone um jeden Steuerstab eingehalten ist, die aus jeweils allen Steuerstäben besteht, die direkt oder diagonal benachbart sind, wobei alle diese benachbarten Steuerstäbe anderen Gruppen angehören. Daher können jeweils alle Steuerstäbe einer Gruppe gleichzeitig bewegt werden.

## Patentansprüche

1. Verfahren zum Anfahren eines Siedewasser-Kernreaktors mit einem Reaktorkern (3), über dessen Querschnitt Steuerstäbe (5) in einem einem zweifarbigen Schachbrett entsprechenden Muster (39) verteilt sind, bei dem jedem Feld des Schachbretts ein Steuerstab zugeordnet ist, wobei die Steuerstäbe (5) im abgeschalteten Zustand des Reaktors in den Reaktorkern (3) eingefahren sind und beim Anfahren wenigstens teilweise aus dem Reaktorkern (3) ausgefahren werden,
**dadurch gekennzeichnet, daß** eine Konfiguration, bei der gleichzeitig bewegte Steuerstäbe (5) im Schachbrettmuster Feldern unterschiedlicher Farbe zugeordnet sind, und/oder eine Konfiguration, bei der praktisch die Hälfte der Steuerstäbe (5) ganz oder teilweise aus dem Reaktorkern (3) herausgefahren ist und vollständig eingefahrene Steuerstäbe Feldern unterschiedlicher Farbe zugeordnet sind, durchlaufen werden, wobei zum Erreichen einer einen Anfahrbereich begrenzenden Obergrenze der Reaktorleistung die Steuerstäbe unter folgenden Beschränkungen aus dem Reaktorkern (3) ausgefahren werden:
a) jeder Steuerstab (32,33) darf nur dann ganz oder teilweise aus dem Reaktorkern (3) bewegt werden, wenn alle Steuerstäbe, die ihm direkt (35) oder diagonal (37) benachbart sind, in Ruhe bleiben, und
b) solange die Obergrenze (LIM) der Reaktorleistung noch nicht erreicht und noch nicht eine vorgegebenen Mindestanzahl (mₒ) der Steuerstäbe (32,33) praktisch vollständig aus dem Reaktorkern (3) herausgefahren ist, bleiben alle Steuerstäbe (35), die jeweils einem ganz oder zumindest teilweise ausgefahrenen Steuerstab (32,33) direkt benachbart sind, vollständig eingefahren.

2. Verfahren nach Anspruch 1,
**dadurch gekennzeichnet, daß** bei einem Befehl zum Herausbewegen eines Steuerstabes (35,37), der zu einem sich zu diesem Zeitpunkt herausbewegenden Steuerstab (32) direkt oder diagonal benachbart ist, der Befehl unterdrückt und die Bewegung aller Steuerstäbe (5) unterbrochen wird.

3. Verfahren nach Anspruch 1 oder 2,
**dadurch gekennzeichnet, daß** bei einem Befehl zum Herausbewegen eines Steuerstabs (35), der zu einem wenigstens teilweise aus dem Reaktorkern (3) ausgefahrenen Steuerstab (45) direkt benachbart ist, der Befehl unterdrückt und die Bewegung aller Steuerstäbe (5) unterbrochen wird.

4. Verfahren nach einem der Ansprüche 1 bis 3,
**dadurch gekennzeichnet, daß** die Mindestanzahl (mₒ) unter der Hälfte der Gesamtzahl der Steuerstäbe (5), vorzugsweise knapp unter dieser Hälfte liegt.

5. Verfahren nach einem der Ansprüche 1 bis 4,
**dadurch gekennzeichnet, daß** die Beschränkung a) und/oder b) spätestens aufgehoben wird, sobald wenigstens die Obergrenze (LIM) erreicht ist.

6. Verfahren nach einem der Ansprüche 1 bis 5,
**dadurch gekennzeichnet, daß** die Obergrenze (LIM) etwa 5 % der Nennleistung des Reaktors beträgt.

7. Verfahren nach einem der Ansprüche 1 bis 6,
**dadurch gekennzeichnet, daß** die Beschränkung b) spätestens aufgehoben wird, sobald wenigstens die Mindestanzahl (mₒ) der Steuerstäbe (5) praktisch vollständig aus dem Reaktorkern (3) ausgefahren ist.

8. Verfahren nach einem der Ansprüche 1 bis 7,
**dadurch gekennzeichnet, daß** die Steuerstäbe (5) in Gruppen ausgefahren werden.

9. Verfahren nach einem der Ansprüche 1 bis 8,
**dadurch gekennzeichnet, daß** nur Steuerstäbe (45) , die um mehr als etwa 5 cm aus ihrer dem eingefahrenen Zustand entsprechenden Anfangslage bewegt sind, als teilweise oder ganz ausgefahren gelten.

10. Verfahren zum Überwachen des Betriebs bei einem Siedewasser-Kernreaktor mit einem Reaktorkern (3), über dessen Querschnitt Steuerstäbe (5) in einem einem zweifarbigen Schachbrett entsprechenden Muster (39) verteilt sind, bei dem jedem Feld des Schachbretts ein Steuerstab (5) zugeordnet ist, und das einem regelmäßigen Gitter mit quadratischen Maschen entspricht, wobei die Steuerstäbe (5) jeweils über einen Steuerstab-Antrieb (21) von einer Anfangslage, die dem vollständig in den Reaktorkern (3) eingefahrenen Steuerstab (5) entspricht, in eine Endlage, die dem vollständig aus dem Reaktorkern (3) ausgefahrenen Steuerstab (5) entspricht, bewegbar sind und während des Anfahrens gleichzeitig jeweils höchstens einige Steuerstab-Antriebe (21) aktiviert und andere Steuerstab-Antriebe (21) verriegelt sind,
**dadurch gekennzeichnet, daß** bei der Verriegelung der Steuerstab-Antriebe (21) eine Konfiguration, bei der gleichzeitig bewegte Steuerstäbe im Schachbrettmuster Feldern unterschiedlicher Farbe zugeordnet sind, und/oder eine Konfiguration, bei der praktisch die Hälfte der Steuerstäbe (5) ganz oder teilweise aus dem Reaktorkern herausgefahren ist und vollständig eingefahrene Steuerstäbe Feldern unterschiedlicher Farbe zugeordnet sind, zugelassen werden, wobei folgende Regeln überwacht werden:
a) die Steuerstab-Antriebe (21) von Steuerstäben, die einander direkt oder diagonal benachbart sind, dürfen nicht gleichzeitig aktiviert sein,
b) bei jedem Steuerstab (32,33), der nicht mehr in der Anfangslage ist, dürfen die Antriebe der direkt benachbarten Steuerstäbe (35) nicht aktiviert werden, bevor eine vor gegebene Mindestzahl (mₒ) von Steuerstäben (5) in der Endlage ist oder die Reaktorleistung eine für den Anfahrvorgang vorgegebene Obergrenze (LIM) erreicht.

11. Verfahren nach Anspruch 10,
**dadurch gekennzeichnet, daß** eine Verletzung der Regel a) und/oder b) eine Blockierung aller Steuerstab-Antriebe (21) auslöst.

12. Verfahren nach Anspruch 10 oder 11,
**dadurch gekennzeichnet, daß** die Mindestzahl (mₒ) höchstens die Hälfte der Gesamtzahl aller Steuerstäbe (5) ist, vorzugsweise etwas weniger als die Hälfte.

13. Verfahren nach einem der Ansprüche 10 bis 12,
**dadurch gekennzeichnet, daß** beim Anfahren ein mindestens mehrere Steuerstäbe (5) umfassender Bereich des Reaktorkerns (3) derart überwacht wird, daß die Steuerstäbe (21) in zwei Gruppen, die entsprechend den unterschiedlich gefärbten Feldern eines Schachbretts (49) über den Bereich verteilt sind, zugeordnet und ihre Antriebe darauf überwacht werden, daß die Antriebe (21) der einen Gruppe verriegelt bleiben und nur ausgewählte Antriebe (21) der anderen Gruppe aktiviert sind.

14. Verfahren nach einem der Ansprüche 10 bis 13,
**dadurch gekennzeichnet, daß** die Steuerstab-Antriebe (21) in Gruppen freigegeben werden.

15. Verfahren nach einem der Ansprüche 10 bis 14,
**dadurch gekennzeichnet, daß** die Obergrenze (LIM) etwa 5 % der Nennleistung des Reaktors beträgt.

16. Verfahren nach einem der Ansprüche 10 bis 15,
**dadurch gekennzeichnet, daß** erst bei einer Verschiebung eines Steuerstabes (5) um mehr als etwa 5 cm gegenüber seiner Anfangslage das Kriterium b) zu einer Verriegelung der direkt benachbarten Steuerstäbe (35) führt.

17. Einrichtung (1) zur Steuerung eines Siedewasser-Kernreaktors mit
- Steuerstäben (5), die über den Reaktorkern (3) des Reaktors nach einem einem zweifarbigen Schachbrett entsprechenden Muster (39) verteilt sind; bei dem jedem Feld des Schachbretts ein Steuerstab (5) zugeordnet ist,
- jeweils einem Steuerstab-Antrieb (21) für jeden Steuerstab (5), mit dem der Steuerstab (5) in Richtung von einer Anfangslage zu einer Endlage ausfahrbar ist,
- einem Steuerstab-Fahrrechner (12), der das Ausfahren der Steuerstäbe (5) steuert, und
- einer Überwachungseinheit (17), die eine Konfiguration, bei der gleichzeitig bewegte Steuerstäbe (5) im Schachbrettmuster Feldern unterschiedlicher Farbe zugeordnet sind und/oder eine Konfiguration, bei der praktisch die Hälfte der Steuerstäbe (5) ganz oder teilweise aus dem Reaktorkern herausgefahren ist, und noch vollständig eingefahrene Steuerstäbe Feldern unterschiedlicher Farbe zugeordnet sind, zuläßt, in dem sie
a) für jeden zum Ausfahren angewählten Steuerstab (32) eine erste Sperrzone (34) definiert, in der alle Antriebe (21) für die dem ausgewählten Steuerstab (32) direkt (35) oder diagonal (37) benachbarten Steuerstäbe nicht aktivierbar sind, und
b) bei jedem Steuerstab (45), der sich praktisch nicht mehr in der Anfangslage befindet, eine zweite Sperrzone (47) definiert, in der alle Antriebe (21) der Steuerstäbe, die direkt (35) benachbart zu diesen bereits nicht mehr in Anfangslage befindlichen Steuerstab (45) sind, während eines Anfahrbetriebs nicht aktivierbar sind.

18. Einrichtung (1) nach Anspruch 17,
**dadurch gekennzeichnet, daß** jeder Steuerstab-Antrieb (21,X) jeweils durch ein Anwahlsignal (Aₓ) ansteuerbar und aktivierbar ist und mit der Überwachungseinheit (17) in jedem Fall, in dem gleichzeitig Anwahlsignale (A_{y}, A_{z}) für einen in der ersten Sperrzone dieses Steuerstabes liegenden anderen Steuerstabes erzeugt werden, die Antriebe beider Steuerstäbe (21) verriegelt werden.

19. Einrichtung nach Anspruch 18,
**dadurch gekennzeichnet, daß** gleichzeitig mit der Verriegelung der beiden Antriebe die Anwahlsignale aller Antriebe (21) gelöscht werden.

20. Einrichtung nach einem der Ansprüche 17 bis 19,
**dadurch gekennzeichnet, daß** im Steuerstab-Fahrrechner (12) ein automatisch ablaufendes Programm zur Auswahl und Ansteuerung der Antriebe beim Anfahren des Reaktors aktivierbar ist, und daß im Fall, daß zwei Antriebe (21) gleichzeitig ausgewählt werden, wobei der Steuerstab (5) eines der ausgewählten Antriebe in der ersten Sperrzone (34) des vom anderen ausgewählten Antrieb (21) ausfahrbaren steuerstabs liegt (32), die Anwahl der zwei Antriebe (21) und das bereits aktivierte Programm mittels der Überwachungseinrichtung (17) löschbar sind.

21. Einrichtung nach Anspruch 20,
**dadurch gekennzeichnet, daß** jeweils bei einem Löschen der Anwahl eines Antriebs (21) dieser Antrieb (21) auch mindestens derart blockiert wird, daß er nicht in Richtung auf seine Endstellung bewegbar ist.

22. Einrichtung nach einem der Ansprüche 17 bis 21,
**dadurch gekennzeichnet, daß** die Überwachung jeder ersten Sperrzone (34) und/oder zweiten Sperrzone (47) durch ein Leistungssignal aufhebbar ist, das eine Leistung des Reaktors anzeigt, die über einer Obergrenze (LIM) für den Anfahrbereich, insbesondere über 5 % der Nennleistung, liegt.

23. Einrichtung nach einem der Ansprüche 17 bis 22,
**dadurch gekennzeichnet, daß** die Überwachung jeder zweiten Sperrzone (47) durch Ausfahrlängensignale (S) aufhebbar ist, die anzeigen, daß eine vorgegebene Mindestzahl (mₒ) der Steuerstäbe (5) praktisch in ihrer Endlage ist.

24. Einrichtung nach Anspruch 23,
**dadurch gekennzeichnet, daß** die Mindestzahl höchstens gleich der Hälfte der Gesamtzahl der Steuerstäbe (5) ist und vorzugsweise knapp unter der Hälfte der Gesamtzahl liegt.

## Claims

1. Method for starting up a boiling water nuclear reactor with a reactor core (3), over the cross section of which control rods (5) are distributed in a pattern (39) which corresponds to a two-colour chessboard and in which each square of the chessboard is assigned a control rod, the control rods (5) being moved into the reactor core (3) in the shutdown state of the reactor and being moved at least partially out of the reactor core (3) during start-up, **characterized in that** a configuration, in which simultaneously moved control rods (5) are assigned to squares of different colour in the chessboard pattern, and/or a configuration, in which virtually half the control rods (5) are moved completely or partially out of the reactor core (3) and fully moved-in control rods are assigned to squares of different colour, are run through, the control rods being moved out of the reactor core (3) under the following restrictions in order to reach a reactor power output upper limit limiting a start-up range:
a) each control rod (32, 33) should be moved completely or partially out of the reactor core (3) only when all the control rods which are directly (35) or diagonally (37) adjacent to it remain at rest, and
b) as long as the reactor power output upper limit (LIM) is not yet reached and a predetermined minimum number (mₒ) of the control rods (32, 33) are not yet moved virtually completely out of the reactor core (3), all the control rods (35) which in each case are directly adjacent to a completely or at least partially moved-out control rod (32, 33) remain moved in completely.

2. Method according to Claim 1, **characterized in that**, in the case of a command to move out a control rod (35, 37) which is directly or diagonally adjacent to a control rod (32) moving out at this moment, the command is suppressed and the movement of all the control rods (5) is interrupted.

3. Method according to Claim 1 or 2, **characterized in that**, in the event of a command to move out a control rod (35) which is directly adjacent to a control rod (45) moved at least partially out of the reactor core (3), the command is suppressed and the movement of all the control rods (5) is interrupted.

4. Method according to one of Claims 1 to 3, **characterized in that** the minimum number (mₒ) is below half the total number of control rods (5), preferably just below this half.

5. Method according to one of Claims 1 to 4, **characterized in that** the restriction a) and/or b) is cancelled at the latest as soon as at least the upper limit (LIM) is reached.

6. Method according to one of Claims 1 to 5, **characterized in that** the upper limit (LIM) is approximately 5% of the rated power output of the reactor.

7. Method according to one of Claims 1 to 6, **characterized in that** the restriction b) is cancelled at the latest as soon as at least the minimum number (mₒ) of control rods (5) have moved virtually completely out of the reactor core (3).

8. Method according to one of Claims 1 to 7, **characterized in that** the control rods (5) are moved out in groups.

9. Method according to one of Claims 1 to 8, **characterized in that** only control rods (45) which are moved more than approximately 5 cm out of their initial position corresponding to the moved-in state are considered to be partially or completely moved out.

10. Method for monitoring the operation of a boiling water reactor with a reactor core (3), over the cross section of which control rods (5) are distributed in a pattern (39) which corresponds to a two-colour chessboard and in which each square of the chessboard is assigned a control rod (5) and which corresponds to a regular grid with square meshes, the control rods (5) being movable in each case via a control rod drive (21) from an initial position, which corresponds to the control rod (5) moved completely into the reactor core (3), in a final position, which corresponds to the control rod (5) moved completely out of the reactor core (3), and, during start-up, simultaneously in each case at most some control rod drives (21) being activated and other control rod drives (21) being interlocked, **characterized in that**, during the interlocking of the control rod drives (21), a configuration, in which simultaneously moved control rods are assigned to squares of different colour in the chessboard pattern, and/or a configuration, in which virtually half the control rods (5) are moved completely or partially out of the reactor core and fully moved-in control rods are assigned to squares of different colour, are permitted, the following rules being monitored:
a) the control rod drives (21) of the control rods which are directly or diagonally adjacent to one another should not be activated simultaneously,
b) in the case of each control rod (32, 33) which is no longer in the initial position, the drives of the directly adjacent control rods (35) should not be activated before a predetermined minimum number (mₒ) of control rods (5) are in the final position or the reactor power output reaches an upper limit (LIM) predetermined for the start-up operation.

11. Method according to Claim 10, **characterized in that** an infringement of rule a) and/or b) triggers a blocking of all the control rod drives (21).

12. Method according to Claim 10 or 11, **characterized in that** the minimum number (mₒ) is at most half the total number of all the control rods (5), preferably somewhat less than half.

13. Method according to one of Claims 10 to 12, **characterized in that**, during start-up, a region of the reactor core (3) which comprises at least a plurality of control rods (5) is monitored in such a way that the control rods (21) are assigned to two groups, which are distributed over the region according to the differently coloured squares of a chessboard (49), and the drives of said control rods are monitored to ensure that the drives (21) of one group remain interlocked and only selected drives (21) of the other group are activated.

14. Method according to one of Claims 10 to 13, **characterized in that** the control rod drives (21) are enabled in groups.

15. Method according to one of Claims 10 to 14, **characterized in that** the upper limit (LIM) is approximately 5% of the rated power output of the reactor.

16. Method according to one of Claims 10 to 15, **characterized in that** the criterion b) leads to an interlocking of the directly adjacent control rods (35) only in the event of a displacement of a control rod (5) of more than approximately 5 cm in relation to its initial position.

17. Apparatus (1) for controlling a boiling water nuclear reactor, with
- control rods (5) which are distributed over the reactor core (3) of the reactor according to a pattern (39) which corresponds to a two-colour chessboard and in which each square of the chessboard is assigned a control rod (5),
- in each case a control rod drive (21) for each control rod (5), by means of which the control rod (5) can be moved out in the direction from an initial position to a final position,
- a control rod movement computer (12) which controls the outward movement of the control rods (5), and
- a monitoring unit (17) which permits a configuration, in which simultaneously moved control rods (5) are assigned to squares of different colour in the chessboard pattern, and/or a core configuration, in which virtually half the control rods (5) are moved completely or partially out of the reactor core and still fully moved-in control rods are assigned to squares of different colour, in that said monitoring step
a) defines for each control rod (32) selected to be moved out a first blocking zone (34) in which all the drives (21) for the control rods directly (35) or diagonally (37) adjacent to the selected control rod (32) cannot be activated, and,
b) in the case of each control rod (45) which is virtually no longer in the initial position, defines a second blocking zone (47) in which all the drives (21) of the control rods which are directly (35) adjacent to this control rod (45) already no longer in the initial position cannot be activated during a start-up mode.

18. Apparatus (1) according to Claim 17, **characterized in that** each control rod drive (21, X) can in each case be controlled and activated by means of a selection signal (Aₓ), and, whenever selection signals (A_{y}, A_{z}) for another control rod located in the first blocking zone of this control rod are generated simultaneously, the drives of the two control rods (21) are interlocked by means of the monitoring unit (17).

19. Apparatus according to Claim 18, **characterized in that** the selection signals of all the drives (21) are annulled simultaneously with the interlocking of the two drives.

20. Apparatus according to one of Claims 17 to 19, **characterized in that** an automatically running program for selecting and activating the drives during the start-up of the reactor can be activated in the control rod movement computer (12), and **in that**, if two drives (21) are selected simultaneously, the control rod (5) of one of the selected drives being located (32) in the first blocking zone (34) of the control rod capable of being moved out by the other selected drive (21), the selection of the two drives (21) and the already activated program can be annulled by means of the monitoring apparatus (17).

21. Apparatus according to Claim 20, **characterized in that** in each case, in the case of an annulment of the selection of a drive (21), this drive (21) is also blocked at least in such a way that it cannot be moved in the direction of its final position.

22. Apparatus according to one of Claims 17 to 21, **characterized in that** the monitoring of every first blocking zone (34) and/or of every second blocking zone (47) can be cancelled by means of a power output signal which indicates a power of the reactor which is above an upper limit (LIM) for the start-up range, in particular above 5% of the rated power output.

23. Apparatus according to one of Claims 17 to 22, **characterized in that** the monitoring of every second blocking zone (47) can be cancelled by means of move-out length signals (S) which indicate that a predetermined minimum number (mₒ) of control rods (5) are virtually in their final position.

24. Apparatus according to Claim 23, **characterized in that** the minimum number is at most equal to half the total number of control rods (5) and is preferably just below half the total number.

## Revendications

1. Procédé de mise en marche d'un réacteur nucléaire à eau bouillante comprenant un coeur (3) de réacteur sur la section transversale duquel sont réparties des barres (5) de réglage suivant un modèle correspondant à un échiquier à deux couleurs, dans lequel à chaque case de l'échiquier est associée une barre de réglage, les barres (5) de réglage étant, lorsque le réacteur est à l'arrêt, introduites dans le coeur (3) du réacteur et, lors de la mise en route, en partie au moins sorties du coeur (3) du réacteur,
**caractérisé en ce que** l'on passe dans une configuration dans laquelle des barres (5) de réglage déplacées simultanément sont associées dans le modèle en échiquier à des cases de couleurs différentes et/ou dans une configuration dans laquelle pratiquement la moitié des barres (5) de réglage est sortie en tout ou partie du coeur (3) du réacteur et des barres de réglage introduites entièrement sont associées à des cases de couleurs différentes, dans lequel pour obtenir une limite supérieure de la puissance du réacteur limitant un domaine de mise en route, on sort les barres de réglage du coeur (3) du réacteur avec les limitations suivantes :
a) chaque barre (32, 33) de réglage ne doit être déplacée en tout ou partie hors du coeur (3) du réacteur que si toutes les barres de réglage qui en sont voisines, directement (35) ou en diagonale (37), restent au repos et
b) tant que la limite (LIM) supérieure de la puissance du réacteur n'est pas encore atteinte et tant qu'un nombre (m₀) minimum prescrit des barres (32, 33) de réglage n'est pas encore entièrement sorti du coeur (3) du réacteur, toutes les barres (35) de réglage qui sont respectivement voisines directement d'une barre (32, 33) de réglage, sortie en tout ou partie, sont introduites complètement.

2. Procédé suivant la revendication 1,
**caractérisé en ce que** s'il y a un ordre de sortir une barre (35, 37) de réglage qui est voisine directement ou en diagonale d'une barre (32) de réglage sortant à cet instant, l'ordre est annulé et le déplacement de toutes les barres (5) de commande est interrompu.

3. Procédé suivant la revendication 1 ou 2,
**caractérisé en ce que** lorsqu'il y a un ordre de sortir une barre (35) de réglage, qui est voisine directement d'une barre (45) de réglage sortie au moins en partie du coeur (3) du réacteur, l'ordre est annulé et le déplacement de toutes les barres (5) de réglage est interrompu.

4. Procédé suivant l'une des revendications 1 à 3,
**caractérisé en ce que** le nombre (m₀) minimum est inférieur à la moitié du nombre total des barres (5) de réglage, de préférence est inférieur de peu à cette moitié.

5. Procédé suivant l'une des revendications 1 à 4,
**caractérisé en ce que** l'on lève ultérieurement la limitation a) et/ou b) dès qu'au moins la limite (LIM) supérieure est atteinte.

6. Procédé suivant l'une des revendications 1 à 5,
**caractérisé en ce que** la limite (LIM) supérieure représente environ 5 % de la puissance nominale du réacteur.

7. Procédé suivant l'une des revendications 1 à 6,
**caractérisé en ce que** l'on lève ultérieurement la limitation b) dès qu'au moins le nombre (m₀) minimum des barres (5) de réglage est sortie pratiquement complètement du coeur (3) du réacteur.

8. Procédé suivant l'une des revendications 1 à 7,
**caractérisé en ce que** l'on sort les barres (5) de réglage par groupes.

9. Procédé suivant l'une des revendications 1 à 8,
**caractérisé en ce que** l'on ne considère comme sorties en tout ou partie que des barres (45) de réglage qui sont déplacées de plus d'à peu près 5 cm de leur position initiale correspondant à l'état introduit.

10. Procédé de contrôle du fonctionnement pour un réacteur nucléaire à eau bouillante ayant un coeur (3) de réacteur sur la section transversale duquel sont réparties des barres (5) de réglage suivant un modèle (39) correspondant à un échiquier à deux couleurs, dans lequel une barre (5) de réglage est associée à chaque case de l'échiquier et qui correspond à un réseau régulier à mailles carrées, les barres (5) de réglage pouvant être déplacées respectivement par un dispositif (21) d'entraînement de barres de réglage depuis une position initiale, qui correspond à la barre (5) de réglage introduite entièrement dans le coeur (3) du réacteur, à une position finale, qui correspond à la barre (5) de réglage sortie complètement du coeur (3) du réacteur, et pendant la mise en route, simultanément respectivement au plus quelques dispositifs (21) d'entraînement de barres de réglage sont activés et d'autres dispositifs (21) d'entraînement de barres de réglage sont verrouillés,
**caractérisé en ce que**, lors du verrouillage des dispositifs (21) d'entraînement de barres de réglage, on autorise une configuration dans laquelle des barres de réglage déplacées simultanément sont associées dans le modèle en échiquier à des cases de couleurs différentes et/ou une configuration dans laquelle pratiquement la moitié des barres (5) de réglage est sortie en tout ou partie du coeur du réacteur et des barres de réglage introduites entièrement sont associées à des cases de couleurs différentes, en contrôlant les règles suivantes :
a) les dispositifs (21) d'entraînement de barres de réglage, qui sont voisines directement ou en diagonale les unes des autres, ne doivent pas être activées simultanément,
b) pour chaque barre (32, 3) de réglage qui n'est plus dans la position initiale, les entraînements des barres (35) de réglage directement voisines ne doivent pas être activés avant qu'un nombre (m₀) minimum donné à l'avance de barres (5) de réglage soit dans la position finale ou que la puissance du réacteur est atteinte d'une limite (LIM) supérieure donnée à l'avance pour l'opération de mise en route.

11. Procédé suivant la revendication 10,
**caractérisé en ce qu'**une violation de la règle a) et/ou b) déclenche un blocage de tous les dispositifs (21) d'entraînement de barres de réglage.

12. Procédé suivant la revendication 10 ou 11,
**caractérisé en ce que** le nombre (m₀) minimum est inférieur à la moitié du nombre total des barres (5) de réglage, de préférence est inférieur de peu à cette moitié.

13. Procédé suivant l'une des revendications 10 à 12,
**caractérisé en ce que** lors de la mise en route d'une partie du coeur (3) du réacteur comprenant au moins plusieurs barres (5) de réglage, on contrôle que les barres (21) de réglage sont associées en deux groupes qui sont répartis sur la partie en conformité avec les cases de couleurs différentes d'un échiquier (49) et l'on contrôle leurs dispositifs d'entraînement de façon à ce que les dispositifs (21) d'entraînement de l'un des groupes restent verrouillés et que seuls des dispositifs (21) d'entraînement sélectionnés de l'autre groupe sont activés.

14. Procédé suivant l'une des revendications 10 à 13,
**caractérisé en ce que** l'on débloque les dispositifs (21) d'entraînement de barres de réglage par groupes.

15. Procédé suivant l'une des revendications 10 à 14,
**caractérisé en ce que** la limite (LIM) supérieure représente à peu près 5 % de la puissance nominale du réacteur.

16. Procédé suivant l'une des revendications 10 à 15,
**caractérisé en ce que** ce n'est que pour un déplacement d'une barre (5) de réglage de plus d'à peu près 5 cm par rapport à sa position initiale que le critère b) entraîne un verrouillage des barres (35) de réglage voisines directement.

17. Dispositif (1) de commande d'un réacteur nucléaire à eau bouillante comprenant
- des barres (5) de réglage, qui sont réparties sur le coeur (3) du réacteur suivant un modèle (35) correspondant à un échiquier à deux couleurs, dans lequel une barre (5) de réglage est associée à chaque case de l'échiquier,
- respectivement un dispositif (21) d'entraînement de barres de réglage pour chaque barre (5) de réglage, par lequel la barre (5) de réglage peut être sortie dans la direction allant d'une position initiale à une position finale,
- un ordinateur (12) de déplacement de barres de réglage, qui commande la sortie des barres (5) de réglage et
- une unité (17) de contrôle, qui autorise une configuration dans laquelle des barres (5) de réglage déplacées simultanément sont associées dans le modèle d'échiquier à des cases de couleurs différentes et/ou une configuration dans laquelle pratiquement la moitié des barres (5) de réglage est sortie en tout ou partie du coeur du réacteur et des barres de réglage entièrement introduites sont associées à des cases de couleurs différentes, dans lequel
a) elle définit, pour chaque barre (32) de réglage sélectionnée comme devant être sortie, une première zone (34) de blocage, dans laquelle tous les dispositifs (21) d'entraînement des barres de réglage voisines directement (35) ou en diagonale (37), de la barre (32) de réglage sélectionnée, ne peuvent pas être activées et
b) elle définit pour chaque barre (45) de réglage, qui ne se trouve pratiquement plus dans la position initiale, une deuxième zone (47) de blocage, dans laquelle tous les dispositifs (21) d'entraînement des barres de réglage qui sont voisines directement (35) de la barre (45) de réglage ne se trouvant déjà plus en la position initiale ne peuvent pas être activés pendant un fonctionnement de mise en route.

18. Dispositif (1) suivant la revendication 17,
**caractérisé en ce que** chaque dispositif (21, X) de barre de réglage peut être commandé et activé respectivement par un signal (Aₓ) de sélection et, dans chaque cas dans lequel sont produits simultanément des signaux (A_{y}, A_{z}) de sélection d'une autre barre de réglage se trouvant dans la première zone de blocage de cette barre de réglage, les dispositifs d'entraînement des deux barres (21) de réglage sont verrouillées par l'unité de contrôle.

19. Dispositif suivant la revendication 18,
**caractérisé en ce que** simultanément au verrouillage des deux dispositifs d'entraînement les signaux de sélection de tous les dispositifs (21) d'entraînement sont effacés.

20. Dispositif suivant l'une des revendications 17 à 19,
**caractérisé en ce que** dans l'ordinateur (12) de déplacement des barres de réglage peut être activé un programme se déroulant automatiquement de sélection et de commande des dispositifs d'entraînement lors de la mise en route du réacteur et **en ce que** dans le cas où deux dispositifs (21) d'entraînement sont sélectionnés simultanément, alors que la barre (5) de réglage de l'un des dispositifs d'entraînement sélectionnés (32) se trouve dans la première zone (34) de blocage de la barre de réglage pouvant être sortie par l'autre dispositif (21) d'entraînement sélectionné, la sélection des deux dispositifs (21) d'entraînement et le programme déjà activé sont effacés au moyen du dispositif (17) de contrôle.

21. Dispositif suivant la revendication 20,
**caractérisé en ce que**, respectivement, lors d'un effacement de la sélection d'un dispositif (21) d'entraînement, ce dispositif (21) d'entraînement est bloqué aussi au moins de façon à ne pas pouvoir être déplacé en direction de sa position finale.

22. Dispositif suivant l'une des revendications 17 à 21,
**caractérisé en ce que** le contrôle de chaque première zone (34) de blocage et/ou deuxième zone (47) de blocage peut être levé par un signal de puissance qui indique une puissance du réacteur qui est au-dessus d'une puissance (LIM) supérieure pour le domaine de la mise en route, notamment supérieure de 5 % à la puissance nominale.

23. Dispositif suivant l'une des revendications 17 à 22,
**caractérisé en ce que** le contrôle de chaque deuxième zone (47) de blocage peut être levé par des signaux (S) de longueur de sortie qui indiquent qu'un nombre (m₀) minimum donné à l'avance des barres (5) de réglage sont pratiquement dans leur position finale.

24. Dispositif suivant la revendication 23,
**caractérisé en ce que** le nombre minimum est inférieur à la moitié du nombre total des barres (5) de réglage et, de préférence, est inférieur de peu à cette moitié.
